# EUROPEAN PATENT APPLICATION

(11) **EP 2 474 800 A2**
(43) Date of publication of application: **11.07.2012**
(21) Application number: 11195561.3
(22) Date of filing: 23.12.2011
(51) Int. Cl.: F25J 3/06, F25J 3/04, F25J 1/02, B01D 53/00

(54) **Carbon dioxide liquefaction system**

(30) Priority: 06.01.2011 US 986085
(71) Applicant: General Electric Company, Schenectady, New York 12345 (US)
(72) Inventor: Raja, Himanshu, 560066 Karnataka (IN); Anand, Ashok Kumar, Schenectady, NY New York 12309 (US); Muthaiah, Veerappan, 560066 Karnataka (IN); Ferguson, Jamal Abdul, Houston, TX Texas 77027 (US); Scarboro, Paul Roberts, Houston, TX Texas 77027 (US)
(74) Representative: Bedford, Grant Richard

(57) **Abstract**

Systems are disclosed herein for enhancing energy usage while pressurizing a carbonaceous gas. Such systems include a carbon dioxide (CO₂) liquefaction system (10). The CO₂ liquefaction system (10) includes a first cooling system (28) capable of cooling a CO₂ gas (74) to liquefy greater than approximately 50 percent of the CO₂ gas (74). The first cooling system (28) produces a first CO₂ liquid (30). The CO₂ gas (74) pressure is less than approximately 3450 kilopascals (500 pounds per square inch absolute).

## Description

The subject matter disclosed herein relates generally to systems for liquefying a carbonaceous gas.

A variety of systems may produce and/or use a carbonaceous gas, such as carbon dioxide (CO₂). Typically, the CO₂ is highly pressurized prior to transport to a downstream system, e.g., through a pipeline. For example, the CO₂ may be pressurized to a pressure between approximately 15,000 kilopascals (kPa) or 2200 pounds per square inch absolute (psia) and 17,250 kPa (2500 psia). Such pressurization may use large amounts of energy. A pressurization system may not be designed with consideration of maximizing energy efficiency in a facility. Thus, the pressurization system may reduce the overall efficiency of the facility.

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system includes a carbon dioxide (CO₂) liquefaction system. The CO₂ liquefaction system includes a first cooling system capable of cooling a CO₂ gas to liquefy greater than approximately 50 percent of the CO₂ gas. The first cooling system produces a first CO₂ liquid. The CO₂ gas pressure is less than approximately 3450 kilopascals (500 pounds per square inch absolute).

In a second embodiment, a system includes an air separation unit including a cryogenic cooling system. The air separation unit is capable of separating air into oxygen and nitrogen. The system also includes a liquefaction system capable of cooling a carbonaceous gas with the cryogenic cooling system of the air separation unit. The cryogenic cooling system is capable of liquefying at least a first portion of the carbonaceous gas to produce a first carbonaceous liquid.

In a third embodiment, a system includes a carbon capture system capable of capturing a carbonaceous gas from a synthetic gas and a liquefaction system. The liquefaction system includes a first cooling system capable of cooling the carbonaceous gas to liquefy at least a first portion of the carbonaceous gas to produce a first carbonaceous liquid and a first residual carbonaceous gas. The liquefaction system also includes a compression system configured to compress the first residual carbonaceous gas.

Various features, aspects, and advantages of the present invention will become better understood when the following detailed description is read with reference to the accompanying drawings in which like characters represent like parts throughout the drawings, wherein:
FIG. 1 depicts a block diagram of an embodiment of a liquefaction system interoperating with embodiments of upstream and downstream systems;
FIG. 2 depicts a block diagram of an embodiment of a liquefaction system using refrigeration systems;
FIG. 3 depicts a block diagram of an embodiment of a liquefaction system using multiple cryogenic cooling systems;
FIG. 4 depicts a block diagram of an embodiment of a liquefaction system using a cryogenic cooling system;
FIG. 5 depicts a block diagram of an embodiment of a liquefaction system using an air separation unit (ASU) including a cryogenic cooling system;
FIG. 6 depicts a block diagram of an embodiment of a liquefaction system using a CO₂ compressor and an ASU including a cryogenic cooling system;
FIG. 7 depicts a block diagram of an embodiment of a liquefaction system using refrigeration systems, separation units, compressors, and coolers;
FIG. 8 depicts a block diagram of an embodiment of a liquefaction system using heat exchangers, flash tanks, compressors, trim coolers, pumps, and solvent chillers; and
FIG. 9 depicts a block diagram of an embodiment of an integrated gasification combined cycle (IGCC) power plant having an embodiment of the liquefaction system.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The disclosed embodiments include systems for liquefying a gas, such as a carbonaceous gas, with a cooling system prior to or without a subsequent compression system. For example, the disclosed embodiments may include one or more liquefaction systems that employ a refrigeration system or a cryogenic cooling system as the primary mechanism to liquefy the gas. In some embodiments, the liquefaction system may employ the refrigeration system or cryogenic cooling system of another component in a facility. For example, the liquefaction system may employ an air separation unit (ASU), which includes a cryogenic cooling system, to liquefy the carbonaceous gas, e.g., carbon dioxide (CO₂). In embodiments using the ASU, the liquefaction system may rely entirely on the cryogenic cooling system of the ASU to liquefy the carbonaceous gas, or the liquefaction system may include upstream or downstream cooling systems or compression systems to supplement the ASU.

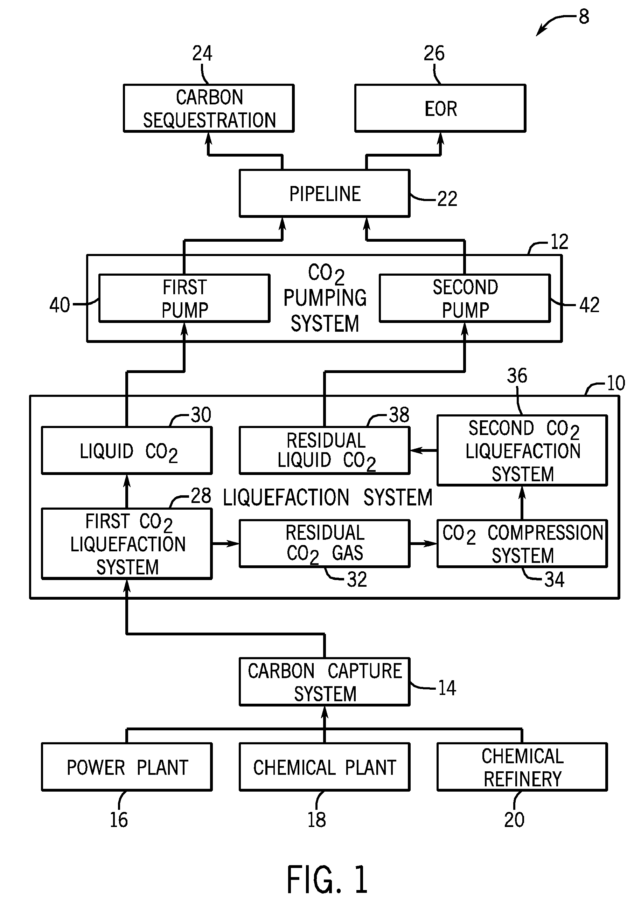

With the foregoing in mind, it may be beneficial to discuss embodiments of systems that may incorporate the techniques as described herein before discussing details of the liquefaction system. FIG. 1 depicts a block diagram of an embodiment of interoperating systems 8. More specifically, the diagram depicts a liquefaction system 10 interoperating with embodiments of a carbon capture system 14, a power plant 16, a chemical production plant 18, and a chemical refinery plant 20, among others. In the depicted embodiment, each of the power plant 16, the chemical production plant 18, and the chemical refinery plant 20 is capable of producing a product having a carbonaceous substance (e.g., CO₂). The carbon capture system 14 may be used to extract the CO₂ from various types of industrial plants, such as plants 16, 18, and 20. An example of such a carbon capture system 14 is manufactured by General Electric Company of Schenectady, New York, under the designation GE Carbon Island™. Indeed, a plurality of embodiments of the carbon capture system 14 may be made available so as to optimally operate in conjunction with each of the plants 16, 18, and 20. That is, each plant 16, 18, and 20, may operate with a separate carbon capture system 14 embodiment that may have been adapted to optimally work with that particular plant embodiment.

Liquefaction of the CO₂ may be beneficial, for example, to reduce the energy required to create a highly pressurized CO₂. Accordingly, the liquefaction system 10 may be used to liquefy the CO₂ that was captured using the carbon capture system 14. The liquefaction system 10 uses a first CO₂ liquefaction system 28 to produce a liquid CO₂ 30 and a residual CO₂ gas 32 from the extracted CO₂. In the illustrated embodiment, the first CO₂ liquefaction system 28 excludes a compressor, and relies on liquefaction techniques such as cooling. The liquid CO₂ 30 may be in a relatively pure form, for example, the liquid CO₂ 30 may be greater than 90, 95, or 98 percent pure CO₂. Conversely, the residual CO₂ gas 32 may be a combination of gases with varying proportions including CO₂, carbon monoxide, hydrogen, and nitrogen, among others. The residual CO₂ gas 32 is processed further using a CO₂ compression system 34 to compress the gas prior to liquefaction by the second CO₂ liquefaction system 36, which produces a residual liquid CO₂ 38. The CO₂ compression system 34 may provide enough compression to cause the residual CO₂ gas 32 to be liquefied by the second liquefaction system 36, yet still reserve some pressurization to be performed by the CO₂ pumping system 12, in order to reduce energy consumption in the system 8. Similar to the first CO₂ liquefaction system 28, the second CO₂ liquefaction system 36 excludes a compressor, and relies on liquefaction techniques such as cooling. In certain embodiments, the liquefaction system 10 may not include compressing and liquefying the residual CO₂ gas 32, but rather the system 10 may consist essentially of the first CO₂ liquefaction system 28 without any compression. In either case, the system 10 may reduce the temperature sufficiently to liquefy the CO₂ at a given pressure. For example, the system 10 may receive the CO₂ gas from the carbon capture system 14 at a pressure below 2050, 2750, or 3450 kPa (or below 300, 400, or 500 psia). The first CO₂ liquefaction system 28 then liquefies the CO₂ gas without compression.

The liquefaction system 10 is also capable of interoperating with a CO₂ pumping system 12 in order to pressurize the liquid CO₂ 30 and the residual liquid CO₂ 38 to high pressures. For example, the CO₂ pumping system 12 may pump the liquid CO₂ 30 and the residual liquid CO₂ 38 to a pressure between approximately 10,500 and 21,000 kPa (or 1500 and 3000 psia), e.g., approximately 15,000 kPa (2200 psia). Within the CO₂ pumping system 12, a first pump 40 is used to pump the liquid CO₂ 30, while a second pump 42 is used to pump the residual liquid CO₂ 38. In some embodiments, the CO₂ pumping system 12 may include only one pump used for both the liquid CO₂ 30 and the residual CO₂ 38, while in other embodiments multiple pumps may be used in series to pressurize the liquid CO₂ 30.

Furthermore, the liquefaction system 10 is capable of interoperating with a pipeline system 22 so as to transport the high pressure liquid CO₂ from the CO₂ pumping system 12 to be used downstream, for example, by a carbon sequestration facility 24 and/or EOR activities 26. In certain embodiments, the carbon sequestration facility 24 may include a geological formation such as a saline aquifer. In other embodiments, other types of geological formations may use the CO₂. The EOR activities 26 may include oil well recovery activities such as gas injection. The gas injection activity can inject the extracted CO₂ at high pressures, so as to displace subsurface oil. Indeed, the CO₂ liquefied by the carbon dioxide liquefaction system 10 may have many beneficial uses and may be sold.

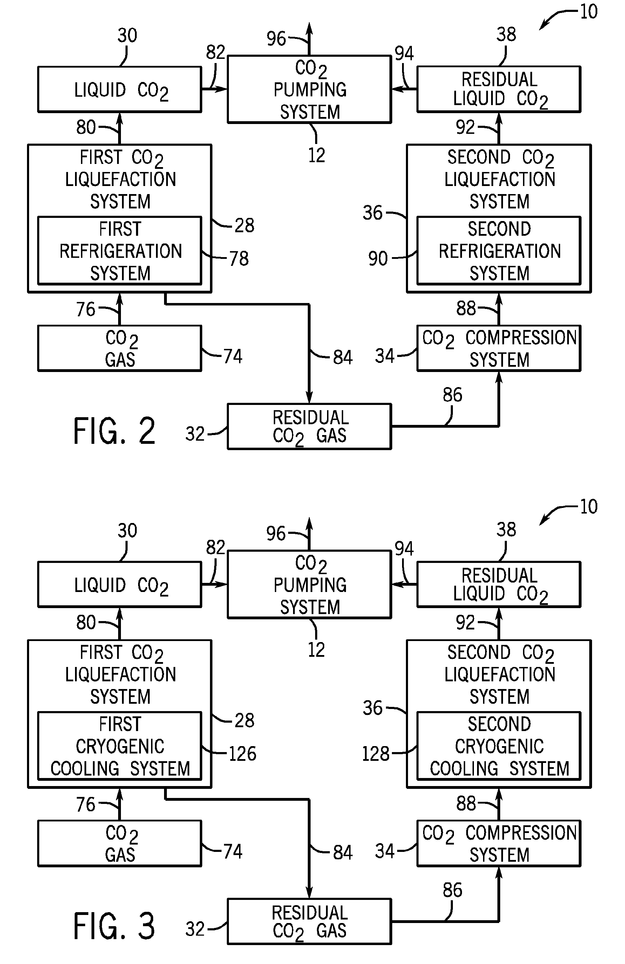

FIG. 2 depicts a block diagram of an embodiment of a liquefaction system 10 using refrigeration systems 78 and 90. The liquefaction system 10 includes the first CO₂ liquefaction system 28, the CO₂ compression system 34, and the second CO₂ liquefaction system 36. A CO₂ gas 74 flows to the first CO₂ liquefaction system 28 as shown via arrow 76. In some embodiments, the CO₂ gas 74 may come from a carbon capture system. In addition, the CO₂ gas 74 may be part of a carbonaceous gas including other substances, such as carbon monoxide, hydrogen, and nitrogen, among others. In certain embodiments, the CO₂ gas 74 may enter the liquefaction system 10 at a pressure less than approximately 700, 1400, 2050, 2750, 3450, 4150, or 4850 kPa (or 100, 200, 300, 400, 500, 600, or 700 psia). For example, the pressure of the CO₂ gas 74 may be approximately 700 to 3450, 1400 to 2750, or 1700 to 2400 kPa (or 100 to 500, 200 to 400, or 250 to 350 psia).

The first CO₂ liquefaction system 28 includes the first refrigeration system 78. The first refrigeration system 78 may utilize a refrigeration cycle, such as a vapor-compression cycle or a vapor absorption cycle. For example, the first refrigeration system 78 may include a vapor-compression cycle with an evaporator, a compressor, a condenser, and an expansion valve. When the CO₂ gas 74 passes through the first refrigeration system 78, the CO₂ gas 74 cools into the liquid CO₂ 30. With such a liquefaction system 10, the CO₂ gas 74 may be cooled to approximately -40 to -29 degrees C (or -40 to -20 degrees F). While some residual CO₂ gas 32 remains, a majority of the CO₂ gas 74 is liquefied, e.g., greater than approximately 50, 60, 70, 80, or 90 percent. For example, 50 to 100 percent, 75 to 100 percent, 85 to 100 percent, or 95 to 100 percent of the CO₂ gas 74 may be liquefied. The liquid CO₂ 30 exits the first CO₂ liquefaction system 28 at arrow 80, then flows as shown via arrow 82 to the CO₂ pumping system 12. The CO₂ pumping system 12 pumps the liquid CO₂ 30 to a high pressure, such as approximately 10,500 to 17, 250, 13,800 to 16,550, or 15,000 to 22,050 kPa (or 1500 to 2500, 2000 to 2400, or 2200 to 3200 psia), e.g., 15,000 kPa (2200 psia). The process of liquefying then pumping the CO₂ may use less energy than a compression-based method for pressurizing CO₂.

The residual CO₂ gas 32 exits the first CO₂ liquefaction system 28 as shown by arrow 84, then flows to the CO₂ compression system 34 as depicted via arrow 86. Consequently, the CO₂ compression system 34 uses one or more compressors to increase the pressure of the residual CO₂ gas 32. For example, the pressure of the residual CO₂ gas 32 may increase from a pre-compression pressure of approximately 700 to 3450, 1400 to 2750, or 1700 to 2400 kPa (or 100 to 500, 200 to 400, or 250 to 350 psia), e.g., 2100 kPa (300 psia), to a post-compression pressure of approximately 6900 to 10,500, 7600 to 9650, or 8600 to 10,000 kPa (or 1000 to 1500, 1100 to 1400, or 1250 to 1450 psia), e.g., 8300 kPa (1200 psia). The CO₂ compression system 34 may use any type of compressor, such as centrifugal, mixed-flow, reciprocating, or rotary screw compressors.

The compressed residual CO₂ gas 32 flows from the CO₂ compression system 34 to the second CO₂ liquefaction system 36 as shown via arrow 88. Within system 36, the second refrigeration system 90 cools a portion of the residual CO₂ gas 32 into the residual liquid CO₂ 38. With such a refrigeration system 90, the residual CO₂ gas 32 may be cooled to approximately -51 to -18, -40 to -29, or -34 to -23 degrees C (or -60 to 0, -40 to -20, or -30 to -10 degrees F), e.g., -40 degrees C (-40 degrees F). The second refrigeration system 90 may liquefy all or substantially all of the residual CO₂ gas 32. For example, the system 90 may liquefy greater than approximately 60, 70, 80, or 90 percent of the residual CO₂ gas 32. The second refrigeration system 90 may use some or all components utilized by the first refrigeration system 78, or it may use its own components in the same or different configuration than the first refrigeration system 78. Likewise, the liquefaction system 10 may only contain one CO₂ liquefaction system that performs the functions described herein for the first and second liquefaction systems 28, 36.

The residual liquid CO₂ 38 exits the second CO₂ liquefaction system 36 as shown by arrow 92, then flows to the CO₂ pumping system 12 as depicted by arrow 94. Again, the CO₂ pumping system 12 pumps the residual liquid CO₂ 38 to a high pressure, such as approximately 10,500 to 17, 250, 13,800 to 16,550, or 15,000 to 22,050 kPa (or 1500 to 2500, 2000 to 2400, or 2200 to 3200 psia), e.g., 15,000 kPa (2200 psia). The pressurized liquid CO₂ now includes the liquid CO₂ 30 and the residual liquid CO₂ 38. The pressurized liquid CO₂ exits the CO₂ pumping system 12 as shown by arrow 96 and is utilized in various downstream applications, such as in a carbon sequestration facility.

FIG. 3 depicts a block diagram of an embodiment of a liquefaction system 10 using multiple cryogenic cooling systems 126 and 128. The process of liquefying a CO₂ gas 74 to produce a liquid CO₂ 30 and a residual liquid CO₂ 38, followed by pressurization using the CO₂ pumping system 12 is similar to the embodiment of FIG. 2. However, the first CO₂ liquefaction system 28 uses a first cryogenic cooling system 126 to cool the CO₂ gas 74 into the liquid CO₂ 30. Also, the second CO₂ liquefaction system 36 uses a second cryogenic cooling system 128 to cool the residual CO₂ gas 32 into the residual liquid CO₂ 38.

The first cryogenic cooling system 126 cools the CO₂ gas 74 into liquid CO₂ 30 using extremely cold temperatures found within the first cryogenic cooling system 126. For example, the first cryogenic cooling system 126 may use temperatures, such as approximately -196 to -150, -185 to -170, or -190 to -157 degrees C (or -320 to -240, - 300 to -275, or -310 to -250 degrees F), e.g., -185 degrees C (-300 degrees F). Although the cryogenic cooling system 126 may be established solely for use within the first CO₂ liquefaction system 28, certain embodiments of the cryogenic cooling system 126 may have other general uses not related to the first CO₂ liquefaction system 28, while allowing in the first CO₂ liquefaction system 28 to utilize its unused cooling capacity. As such, the first cryogenic cooling system 126 cools the CO₂ gas 74 into liquid CO₂ 30 without utilizing any additional energy. For example, the first cryogenic cooling system 126 may be part of an air separation unit (ASU). With such a liquefaction system 10, the CO₂ gas 74 may be cooled to approximately -51 to -18, - 40 to -29, or -34 to -23 degrees C (or -60 to 0, -40 to -20, or -30 to -10 degrees F), e.g., -40 degrees C (-40 degrees F). The second cryogenic cooling system 128 functions in generally the same manner as the first cryogenic cooling system 126, and in some embodiments may be part of the same overall system. As can be appreciated, energy may be conserved by such a system that liquefies a CO₂ gas using a cryogenic cooling system, followed by pumping the liquid CO₂ to a desired pressure. Again, the second cryogenic cooling system 128 may be dedicated to the second CO₂ liquefaction system 36, or the system 128 may function to cool multiple types of equipment. For example, the second cryogenic cooling system 128 may be part of an ASU. In certain embodiments, the systems 126 and 128 may be a single cryogenic cooling system or independent cryogenic cooling systems.

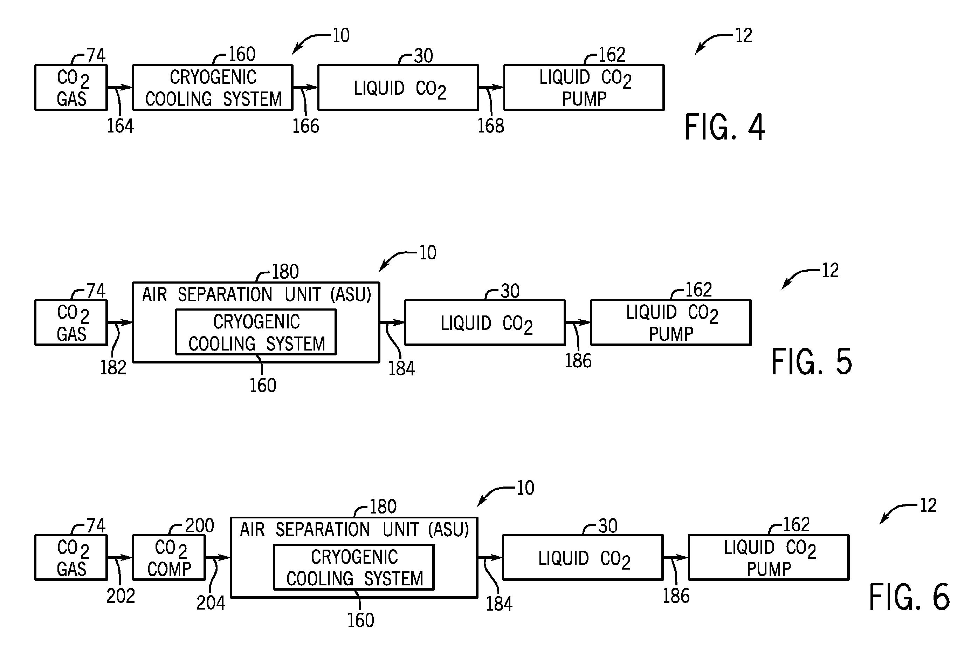

FIG. 4 depicts a block diagram of an embodiment of a liquefaction system 10 using a cryogenic cooling system 160. A CO₂ gas 74 flows to the cryogenic cooling system 160 as depicted by arrow 164. For example, the CO2 gas 74 may be at a pressure less than approximately 700, 1400, 2050, 2750, 3450, 4150, or 4850 kPa (or 100, 200, 300, 400, 500, 600, or 700 psia). The cryogenic cooling system 160 then cools the CO₂ gas 74 to produce liquid CO₂ 30 as shown by arrow 166. For example, the cryogenic cooling system 160 may use extremely cold temperatures, such as approximately -196 to -150, -185 to -170, or -190 to -157 degrees C (or -320 to -240, - 300 to -275, or -310 to -250 degrees F), e.g., -185 degrees C (-300 degrees F). With such a liquefaction system 10, the CO₂ gas 74 may be cooled to approximately -51 to -18, -40 to -29, or -34 to -23 degrees C (or -60 to 0, -40 to -20, or -30 to -10 degrees F), e.g., -40 degrees C (-40 degrees F). The liquid CO₂ 30 then flows to the liquid CO₂ pump 162 of the CO₂ pumping system 12 as shown by arrow 168. The liquid CO₂ pump 162 pressurizes the liquid CO₂ 30 to the desired pressure, such as approximately 13,800 to 21,000, 15,000 to 17,250, or 16,550 to 22,050 kPa (or 2000 to 3000, 2200 to 2500, or 2400 to 3200 psia), e.g., 17,250 kPa (2500 psia). As previously described, energy may be conserved by such a system that liquefies a CO₂ gas using a cryogenic cooling system, then pumps the liquid CO₂ to a desired pressure. In the illustrated embodiment, the system 10 excludes a compressor. Thus, the system 10 may be described as consisting essentially of (or only) the cryogenic cooling system 160 (or the system 160 and the pump 162), e.g., as a single package or assembly.

FIG. 5 depicts a block diagram of an embodiment of a liquefaction system 10 using an air separation unit (ASU) 180 including a cryogenic cooling system 160. The ASU 180 uses the cryogenic cooling system 160 to separate atmospheric air into its components, such as nitrogen and oxygen. In the illustrated embodiment, the ASU 180 is configured to allow pathways carrying CO₂ to pass through its cryogenic cooling system 160. In some embodiments, the ASU 180 may output a coolant flow to a separate heat exchanger of the liquefaction system 10, thereby allowing cooling and liquefaction of the CO₂ gas 74 away from the ASU 180. In either embodiment, the cryogenic cooling system 160 transfers sufficient heat from the CO₂ to cause the CO₂ gas 74 to liquefy. The otherwise unused cooling capacity of the ASU 180 is captured by the liquefaction system 10, eliminating the need for a separate cooling system (e.g., a separate refrigeration system, cryogenic cooling system, etc.).

Specifically, the CO₂ gas 74 flows to the cryogenic cooling system 160 within the ASU 180 as depicted by arrow 182. For example, the CO₂ gas 74 may be at a pressure of less than approximately 700, 1400, 2050, 2750, 3450, 4150, or 4850 kPa (or 100, 200, 300, 400, 500, 600, or 700 psia). The cryogenic cooling system 160 then cools the CO₂ gas 74 to produce liquid CO₂ 30 as shown by arrow 184. For example, the cryogenic cooling system 160 may use extremely cold temperatures, such as approximately -196 to -150, -185 to -170, or -190 to -157 degrees C (or -320 to -240, -300 to -275, or -310 to -250 degrees F), e.g., -185 degrees C (-300 degrees F). With such a liquefaction system 10, the CO₂ gas 74 may be cooled to approximately -51 to -18, -40 to -29, or -34 to -23 degrees C (or -60 to 0, -40 to -20, or -30 to -10 degrees F), e.g., -40 degrees C (-40 degrees F). The liquid CO₂ 30 then flows to the liquid CO₂ pump 162 of the CO₂ pumping system 12 as shown by arrow 186. The liquid CO₂ pump 162 pressurizes the liquid CO₂ 30 to the desired pressure, such as approximately 13,800 to 21,000, 15,000 to 17,250, or 16,550 to 22,050 kPa (or 2000 to 3000, 2200 to 2500, or 2400 to 3200 psia), e.g., 17,250 kPa (2500 psia). With such a system, energy may be conserved by liquefying a CO₂ gas using a cryogenic cooling system, followed by pumping the liquid CO₂ to the desired pressure. In the illustrated embodiment, the liquefaction system 10 may be described as consisting essentially of (or only) the ASU 180 with modifications for the CO₂ gas 74 flow (or the ASU 180 and an external heat exchanger), e.g., as a single package or assembly.

FIG. 6 depicts a block diagram of an embodiment of a liquefaction system 10 using a CO₂ compressor 200 and the ASU 180 including the cryogenic cooling system 160. Similar to the embodiment of FIG. 5, the ASU 180 includes the cryogenic cooling system 160 and may function primarily to separate air into its components such as nitrogen and air. However, the ASU 180 is also modified to cool and liquefy the CO₂ gas 74 into the liquid CO₂ 30, as indicated by arrow 184. Further, the liquid CO₂ pump 162 pumps the liquid CO₂ 30 to the desired pressure as indicated by arrow 186. In contrast to the embodiments of FIGS. 1-5, the liquefaction system 10 includes the CO₂ compressor 200 rather than excluding a CO₂ compressor.

The CO₂ gas 74 flows to the CO₂ compressor 200 before it flows to the ASU 180 as shown by arrows 202 and 204. As such, the CO₂ compressor 200 compresses the CO₂ gas 74 prior to liquefaction in order to decrease the amount of subsequent cooling and pressurization to liquefy the CO₂ gas 74. For example, in one embodiment, the CO₂ compressor 200 may compress the CO₂ gas 74 to approximately 700 to 3450, 1400 to 2750, or 1700 to 2400 kPa (or 100 to 500, 200 to 400, or 250 to 350 psia), e.g., 2100 kPa (300 psia), while in another embodiment the CO₂ gas 74 is compressed to approximately 6900 to 10,500, 7600 to 9650, or 8600 to 10,000 kPa (or 1000 to 1500, 1100 to 1400, or 1250 to 1450 psia), e.g., 8300 kPa (1200 psia). However, the liquefaction system 10 may still decrease energy used in situations where the CO₂ compressor 200 defers some pressurization of the CO₂ gas 74 to the liquid CO₂ pump 162. Furthermore, the cryogenic cooling system 160 of the ASU 180 is used to avoid implementation of a separate cooling system, thereby reducing costs and increasing overall efficiency at the facility.

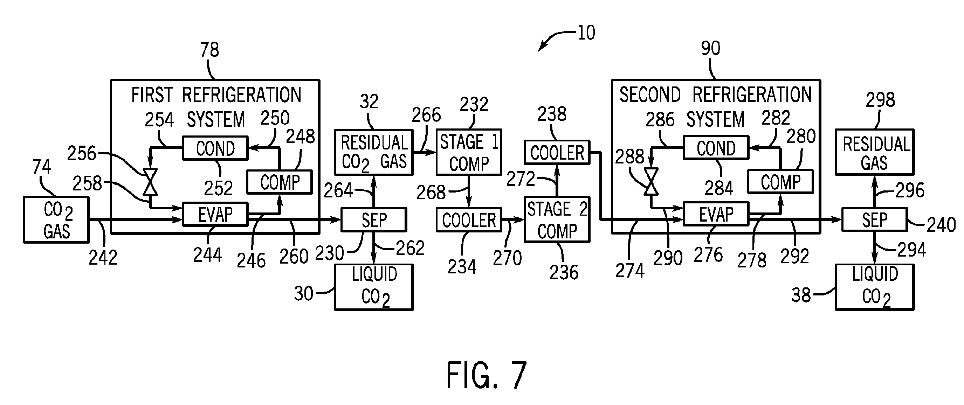

FIG. 7 depicts a block diagram of an embodiment of a liquefaction system 10 using refrigeration systems 78, 90, separation units 230, 240, compressors 232, 236, and coolers 234, 238. The CO₂ gas 74 first enters the first refrigeration system 78 as shown by arrow 242. For example, the CO₂ gas 74 may be at a pressure of less than approximately 700, 1400, 2050, 2750, 3450, 4150, or 4850 kPa (or 100, 200, 300, 400, 500, 600, or 700 psia). Within the first refrigeration system 78, a refrigeration cycle cools the CO₂ gas 74 to liquefy at least a portion of the CO₂ gas 74. As can be appreciated, the refrigeration cycle of system 78 may include a coolant (e.g., a refrigerant or solvent) that flows through an evaporator 244, a path 246 to a compressor 248, a path 250 to a condenser 252, a path 254 to an expansion valve 256, and a path 258 back to the evaporator 244. At the evaporator 244, the coolant absorbs heat from the CO₂ gas 74, which causes the CO₂ gas 74 to cool into the liquid CO₂ 30 with a residual CO₂ gas 32 remaining. The CO₂ gas 74 may cool to approximately - 51 to -18, -40 to -29, or -34 to -23 degrees C (or -60 to 0, -40 to -20, or -30 to -10 degrees F), e.g., -40 degrees C (-40 degrees F), to generate the liquid CO₂ 30.

The liquid CO₂ 30 and the residual CO₂ gas 32 then flow to the separation unit 230 as shown by arrow 260. The separation unit 230 causes the liquid CO₂ 30 to separate from the residual CO₂ gas 32, with the liquid CO₂ 30 exiting at one location as shown by arrow 262, and the residual CO₂ gas 32 exiting at another location as shown by arrow 264. The separation unit 230 may be a flash tank, or other type of device useful for causing a liquid to separate from a gas. In certain embodiments, the liquid CO₂ 30 may be pumped to a high pressure using a CO₂ pumping system. For example, the liquid CO₂ 30 may be pumped to a pipeline and/or a downstream application, such as carbon sequestration. Under certain conditions, a majority of the fluid exiting the first refrigeration system 78 may be liquid CO₂ 30. For example, at least approximately 90 or 95 percent of the fluid exiting the first refrigeration system 78 may be liquid CO₂ 30, while 5 or 10 percent of the fluid may be the residual CO₂ gas 32. Other embodiments may have greater than approximately 50, 60, 70, 80, 90, 92.5, 95, 97.5, or 99 percent of the exiting fluid being liquid CO₂ 30.

The residual CO₂ gas 32 then undergoes steps of compression, cooling, compression, and cooling by the first and second stage compressors 232 and 236 and the coolers 234 and 238 to progressively cool and pressurize the residual CO₂ gas 32. For example, the residual CO₂ gas 32 flows to the first stage compressor 232 as shown by arrow 266. The first stage compressor 232 provides a first amount of compression of the residual CO₂ gas 32, resulting in an increase in pressure and temperature. The cooler 234 then cools the CO₂ gas 32 prior to the second stage compressor 236 as shown by arrows 268, 270, thereby reducing the work required by the compressor 236. Again, the second stage compressor 236 increases the pressure and temperature of the CO₂ gas 32. Thus, the cooler 238 cools the CO₂ gas 32 before subsequent liquefaction by the second refrigeration system 90. Although the illustrated embodiment includes two stages of compression and cooling prior to the second stage refrigeration system 90, any suitable number of compressors and coolers may be used in the system 10 (e.g., 1 to 5).

The first stage compressor 232 increases both the temperature and pressure of the residual CO₂ gas 32. For example, the pressure may increase by a factor of approximately 0.1 to 5 or 1.5 to 2.5, and the temperature may increase by an amount of 10 to 200 or 50 to 150 degrees C. The pressure may be approximately 700 to 3450, 1400 to 2750, or 1700 to 2400 kPa (or 100 to 500, 200 to 400, or 250 to 350 psia), e.g., 2100 kPa (300 psia), when the residual CO₂ gas 32 enters the first stage compressor 232. The pressure may be approximately 2750 to 4850, 3450 to 4150, or 4150 to 4850 kPa (or 400 to 700, 500 to 600, or 600 to 700 psia), e.g., 4200 kPa (600 psia), when the residual CO₂ gas 32 exits the first stage compressor 232. Furthermore, the temperature may be approximately -40 to -7, -34 to -12, or -29 to 0 degrees C (or -40 to 20, -30 to 10, or -20 to 32 degrees F), e.g., -20 degrees C (0 degrees F), when the residual CO₂ gas 32 enters the first stage compressor 232. The temperature may be approximately 0 to 66, 27 to 50, or 32 to 93 degrees C (or 32 to 150, 80 to 120, or 90 to 200 degrees F), e.g., 50 degrees C (120 degrees F), when the residual CO₂ gas 32 exits the first stage compressor 232.

The residual CO₂ gas 32 then flows from the first stage compressor 232 to the cooler 234 as depicted by arrow 268. At the cooler 234, the residual CO₂ gas 32 may be cooled to approximately an ambient temperature, such as approximately 10 to 32, 18 to 30, or 27 to 38 degrees C (or 50 to 90, 65 to 85, or 80 to 100 degrees F), e.g., 30 degrees C (85 degrees F). The cooler 234 uses a coolant (e.g., water or air) to decrease the temperature of the residual CO₂ gas 32. The residual CO₂ gas 32 then flows to the second stage compressor 236 as shown by arrow 270.

The second stage compressor 236 increases both the temperature and pressure of the residual CO₂ gas 32. For example, the pressure may increase by a factor of approximately 0.1 to 5 or 1.5 to 2.5, and the temperature may increase by an amount of 10 to 200 or 50 to 150 degrees C. The pressure may be approximately 2750 to 4850, 3450 to 4150, or 4150 to 4850 kPa (or 400 to 700, 500 to 600, or 600 to 700 psia), e.g., 4200 kPa (600 psia), when the residual CO₂ gas 32 enters the second stage compressor 236. The pressure may be approximately 6900 to 10,500, 7600 to 9650, or 8600 to 10,000 kPa (or 1000 to 1500, 1100 to 1400, or 1250 to 1450 psia), e.g., 8300 kPa (1200 psia), when the residual CO₂ gas 32 exits the second stage compressor 236. Furthermore, the temperature may be approximately 10 to 32, 18 to 30, or 27 to 38 degrees C (or 50 to 90, 65 to 85, or 80 to 100 degrees F), e.g., 30 degrees C (85 degrees F), when the residual CO₂ gas 32 enters the second stage compressor 236. The temperature may be approximately 38 to 93, 66 to 82, or 70 to 93 degrees C (or 100 to 200, 150 to 180, or 160 to 200 degrees F), e.g., 70 degrees C (160 degrees F), when the residual CO₂ gas 32 exits the second stage compressor 236.

The residual CO₂ gas 32 then flows to the cooler 238 as depicted by arrow 272. At the cooler 238, the residual CO₂ gas 32 may be cooled to approximately an ambient temperature, such as approximately 10 to 32, 18 to 30, or 27 to 38 degrees C (or 50 to 90, 65 to 85, or 80 to 100 degrees F), e.g., 30 degrees C (85 degrees F). The cooler 238 uses a coolant (e.g., air or water) to decrease the temperature of the residual CO₂ gas 32. The residual CO₂ gas 32 then flows to the second refrigeration system 90 as shown by arrow 274. In certain embodiments, the coolers 234, 238 may use the same cooler system, such as using the same heat exchanger with multiple cooling channels. Furthermore, the coolers 234, 238 may be part of the first and/or second refrigeration systems 78, 90.

The second refrigeration system 90 is similar to the first refrigeration system 78. As previously discussed, the refrigeration cycle of the system 90 may include a coolant (e.g., a refrigerant or solvent) that flows through an evaporator 276, a path 278 to a compressor 280, a path 282 to a condenser 284, a path 286 to an expansion valve 288, and a path 290 back to the evaporator 276. At the evaporator 276, the coolant absorbs heat from the CO₂ gas 74 which causes the residual CO₂ gas 32 to cool into the liquid CO₂ 38 with a residual gas 298 remaining. The residual CO₂ gas 32 may cool to approximately -51 to -18, -40 to -29, or -34 to -23 degrees C (or -60 to 0, -40 to -20, or -30 to -10 degrees F), e.g., -40 degrees C (-40 degrees F), to generate the liquid CO₂ 38.

The liquid CO₂ 38 and the residual gas 298 flow then to the separation unit 240 as shown by arrow 292. The separation unit 240 causes the liquid CO₂ 38 to separate from the residual gas 298, with the liquid CO₂ 38 exiting at one location as shown by arrow 294, and the residual gas 298 exiting at another location as shown by arrow 296. In certain embodiments, the liquid CO₂ 38 may be pumped to a high pressure using a CO₂ pumping system. For example, the liquid CO₂ 38 may be pumped to a pipeline and/or a downstream application such as carbon sequestration. Under certain conditions, a majority of the fluid exiting the second refrigeration system 90 may be liquid CO₂ 38. For example, approximately 60, 65, or 70 percent of the fluid exiting the second refrigeration system 90 may be liquid CO₂ 30, while 30, 35, or 40 percent of the fluid may be the residual gas 298. Other embodiments may have greater than approximately 50, 60, 70, 80, 90, 92.5, 95, 97.5, or 99 percent of the exiting fluid being liquid CO₂ 30. As can be appreciated, using the liquefaction system 10 to produce a pressurized liquid CO₂ may decrease energy consumption required for pressurization.

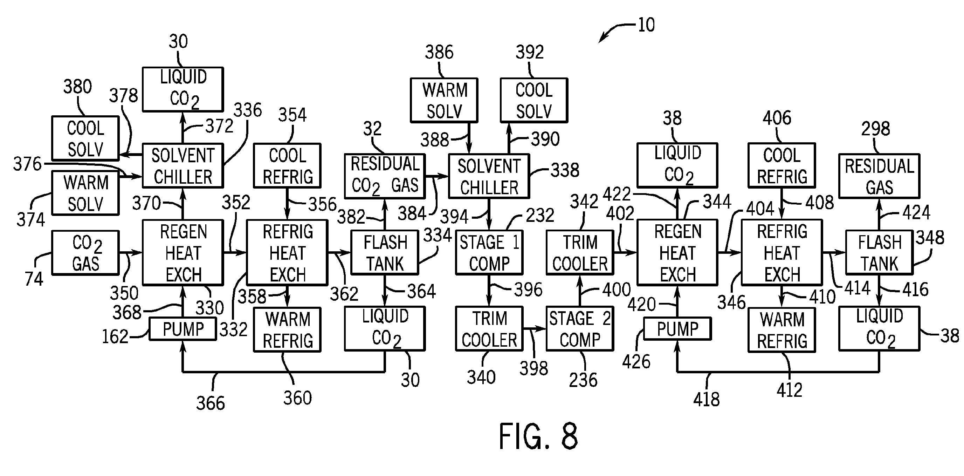

FIG. 8 depicts a block diagram of an embodiment of a liquefaction system 10 using heat exchangers 330, 332, 344, 346, flash tanks 334, 348, compressors 232, 236, trim coolers 340, 342, pumps 162, 426, and solvent chillers 336, 338. The CO₂ gas 74 first passes through the regenerative heat exchanger 330 as shown by arrow 350. The CO₂ gas 74 may enter the liquefaction system 10 with a pressure such as approximately 700 to 3450, 1400 to 2750, or 1700 to 2400 kPa (or 100 to 500, 200 to 400, or 250 to 350 psia), e.g., 2100 kPa (300 psia). Within the regenerative heat exchanger 330, an already cooled liquid CO₂ 30 absorbs heat from the CO₂ gas 74 which may cause the temperature of the CO₂ gas 74 to decrease. The cooled liquid CO₂ 30 may have a temperature of approximately -51 to -18, -34 to -12, or -40 to -23 degrees C (or -60 to 0, -30 to 10, or -40 to -10 degrees F), e.g., -32 degrees C (-26 degrees F). The temperature of the CO₂ gas 74 may begin at approximately -18 to 18, -7 to 7, or 0 to 27 degrees C (or 0 to 65, 20 to 45, or 32 to 80 degrees F), e.g., 0 degrees C (32 degrees F), then decrease to approximately -29 to -12, -23 to -18, or -18 to -12 degrees C (or -20 to 10, -10 to 0, or 0 to 10 degrees F), e.g., -22 degrees C (-7 degrees F).

The CO₂ gas 74 then flows to the refrigeration heat exchanger 332 as shown by arrow 352. The refrigeration heat exchanger 332 uses a cool refrigerant 354 entering at arrow 356 to transfer heat from the CO₂ gas 74 to the refrigerant 354. This heat exchange causes the cool refrigerant 354 to exit the refrigeration heat exchanger 332 as a warm refrigerant 360, as shown by arrow 358. The refrigerant 354, 360 may be a solvent or other solution useful for transferring heat. Furthermore, the refrigeration heat exchanger 332 and the regenerative heat exchanger 330 may be part of a single refrigeration system, which may also include other heat exchangers, chillers, and coolers. After heat is transferred from the CO₂ gas 74 to the refrigerant 354, at least a portion of the CO₂ gas 74 is liquefied to the liquid CO₂ 30, while another portion of the CO₂ gas 74 remains as a residual CO₂ gas 32. The liquid CO₂ 30 may have a temperature of approximately -51 to -18, -40 to -29, or -34 to -23 degrees C (or -60 to 0, -40 to -20, or -30 to -10 degrees F), e.g., -40 degrees C (-40 degrees F).

The liquid CO₂ 30 and the residual CO₂ gas 32 then flow to the flash tank 334 as shown by arrow 362. The flash tank 334 causes the liquid CO₂ 30 to separate from the residual CO₂ gas 32, with the liquid CO₂ 30 exiting at one location as shown by arrow 364, and the residual CO₂ gas 32 exiting at another location as shown by arrow 382. In other embodiments, the flash tank 334 may be replaced by any type of separation unit useful for separating a liquid from a gas. Under certain conditions, a majority of the fluid exiting the flash tank 334 may be liquid CO₂ 30. For example, approximately 90 to 95 percent of the fluid exiting the flash tank 334 may be liquid CO₂ 30, while 5 to 10 percent of the fluid may be the residual CO₂ gas 32. Other embodiments may have greater than approximately 50, 60, 70, 75, 80, 90, 92.5, 95, 97.5, or 99 percent of the exiting fluid being liquid CO₂ 30.

The liquid CO₂ 30 then flows, as shown by arrow 366, to a pump 162 configured to pump the liquid CO₂ 30 to a high pressure, such as approximately 10,500 to 17, 250, 13,800 to 16,550, or 15,000 to 22,050 kPa (or 1500 to 2500, 2000 to 2400, or 2200 to 3200 psia), e.g., 15,000 kPa (2200 psia). The liquid CO₂ 30 may increase in temperature after passing through the flash tank 334 and the pump 162 to approximately -51 to -18, -34 to -12, or -40 to -23 degrees C (or -60 to 0, -30 to 10, or -40 to -10 degrees F), e.g., -32 degrees C (-26 degrees F). At this point, the liquid CO₂ 30 flows to the regenerative heat exchanger 330, as shown by arrow 368. The chilled liquid CO₂ 30 has a significant cooling capacity, while downstream applications of the liquid CO₂ 30 may not require a low temperature of the liquid CO₂ 30. For example, the downstream applications may require an ambient temperature and high pressure of the liquid CO₂ 30. Accordingly, the regenerative heat exchanger 330 uses the cooling capacity of the liquid CO₂ to pre-cool the CO₂ gas 74 upstream of the refrigeration heat exchanger 332, thereby reducing the cooling requirements of the heat exchanger 332 while warming the liquid CO₂ 30. During the heat exchange, the liquid CO₂ 30 temperature may increase to approximately -18 to 7, -7 to 0, or -23 to -12 degrees C (or 0 to 45, 20 to 32, or -10 to 10 degrees F), e.g., -14 degrees C (7 degrees F).

After the liquid CO₂ 30 exits the regenerative heat exchanger 330, as indicated by arrow 370, the liquid CO₂ 30 enters the solvent chiller 336. The liquid CO₂ 30 acts as a coolant to transfer heat from a warm solvent 374 that enters the solvent chiller 336 as shown by arrow 376. The liquid CO₂ 30 chills the warm solvent 374 resulting in a cool solvent 380, which exits the solvent chiller 336 at arrow 378. The warm solvent 374 may enter the solvent chiller 336 with a temperature of approximately 0 to 32, 10 to 27, or 18 to 38 degrees C (or 32 to 90, 50 to 80, or 65 to 100 degrees F), e.g., 10 degrees C (50 degrees F), and exit as the cool solvent 380 with a temperature of approximately -18 to 7, -7 to 0, or -23 to -12 degrees C (or 0 to 45, 20 to 32, or -10 to 10 degrees F), e.g., -12 degrees C (10 degrees F). The solvent 374, 384 may be any solvent, such as methanol, Selexol™, Purisol™, or Rectisol™. For example, the solvent 374, 384 may be used in a gas treatment unit as discussed below. Other embodiments may not use a solvent chiller, or may use a chiller with a refrigerant or other coolant in place of a solvent. The liquid CO₂ 30 exits the solvent chiller 336, as shown by arrow 372, with a temperature that may be an ambient temperature, such as approximately 10 to 32, 18 to 30, or 27 to 38 degrees C (or 50 to 90, 65 to 85, or 80 to 100 degrees F), e.g., 30 degrees C (85 degrees F). The liquid CO₂ 30 may be used in a variety of downstream applications. For example, the liquid CO₂ 30 may be used in carbon sequestration or enhanced oil recovery.

Returning to the flash tank 334, the residual CO₂ gas 32 flows from the flash tank 334 to the solvent chiller 338 as shown by arrows 382, 384. The residual CO₂ gas 32 acts as a coolant to transfer heat from a warm solvent 386 that enters the solvent chiller 338 as shown by arrow 388. The residual CO₂ gas 32 chills the warm solvent 386 resulting in a cool solvent 392, which exits the solvent chiller 338 at arrow 390. The warm solvent 386 may enter the solvent chiller 338 with a temperature of approximately 0 to 32, 10 to 27, or 18 to 38 degrees C (or 32 to 90, 50 to 80, or 65 to 100 degrees F), e.g., 10 degrees C (50 degrees F), and exit as the cool solvent 392 with a temperature of approximately -51 to -18, -34 to -12, or -40 to -23 degrees C (or -60 to 0, -30 to 10, or -40 to -10 degrees F), e.g., -30 degrees C (-20 degrees F). The residual CO₂ gas 32 exits the solvent chiller 338, as shown by arrow 394, and flows to the first stage compressor 232. The exiting residual CO₂ gas 32 may have a temperature of approximately -40 to -7, -34 to -12, or -29 to 0 degrees C (or -40 to 20, -30 to 10, or -20 to 32 degrees F), e.g., -20 degrees C (0 degrees F).

The first stage compressor 232 provides a first amount of compression of the residual CO₂ gas 32, resulting in an increase in pressure and temperature. The residual CO₂ gas 32 then flows through a trim cooler 340 as indicated by arrow 396, a second stage compressor 236 as indicated by arrow 398, and a trim cooler 342 as indicated by arrow 400. The trim cooler 340 cools the CO₂ residual gas 32 prior to the second stage compressor 236, thereby reducing the work required by the compressor 236. Again, the second stage compressor 236 increases the temperature and pressure of the residual CO₂ gas 32. Thus, the trim cooler 342 cools the CO₂ gas 32 before subsequent liquefaction. Although the illustrated embodiment includes two stages of compression and cooling, any suitable number of compressors and coolers may be used in the system 10 (e.g., 1 to 5).

The first stage compressor 232 increases the temperature and pressure of the residual CO₂ gas 32. The pressure, for example, may be approximately 700 to 3450, 1400 to 2750, or 1700 to 2400 kPa (or 100 to 500, 200 to 400, or 250 to 350 psia), e.g., 2100 kPa (300 psia), when the residual CO₂ gas 32 enters the first stage compressor 232. The pressure may be approximately 2750 to 4850, 3450 to 4150, or 4150 to 4850 kPa (or 400 to 700, 500 to 600, or 600 to 700 psia), e.g., 4200 kPa (600 psia), when the residual CO₂ gas 32 exits the first stage compressor 232. Furthermore, the temperature may be approximately -40 to -7, -34 to -12, or -29 to 0 degrees C (or -40 to 20, -30 to 10, or -20 to 32 degrees F), e.g., -20 degrees C (0 degrees F), when the residual CO₂ gas 32 enters the first stage compressor 232. The temperature may be approximately 0 to 66, 27 to 50, or 32 to 93 degrees C (or 32 to 150, 80 to 120, or 90 to 200 degrees F), e.g., 50 degrees C (120 degrees F), when the residual CO₂ gas 32 exits the first stage compressor 232.

The residual CO₂ gas 32 next flows from the first stage compressor 232 to the trim cooler 340 as depicted by arrow 396. At the trim cooler 340, the residual CO₂ gas 32 may be cooled to approximately an ambient temperature, such as 10 to 32, 18 to 30, or 27 to 38 degrees C (or 50 to 90, 65 to 85, or 80 to 100 degrees F), e.g., 30 degrees C (85 degrees F). The trim cooler 340 uses a coolant (e.g., water or air) to decrease the temperature of the residual CO₂ gas 32. The residual CO₂ gas 32 then flows to the second stage compressor 236 as shown by arrow 398.

The second stage compressor 236 increases the temperature and pressure of the residual CO₂ gas 32. The pressure may be approximately 2750 to 4850, 3450 to 4150, or 4150 to 4850 kPa (or 400 to 700, 500 to 600, or 600 to 700 psia), e.g., 4200 kPa (600 psia), when the residual CO₂ gas 32 enters the second stage compressor 236. The pressure may be approximately 6900 to 10,500, 7600 to 9650, or 8600 to 10,000 kPa (or 1000 to 1500, 1100 to 1400, or 1250 to 1450 psia), e.g., 8300 kPa (1200 psia), when the residual CO₂ gas 32 exits the second stage compressor 236. Furthermore, the temperature may be approximately 10 to 32, 18 to 30, or 27 to 38 degrees C (or 50 to 90, 65 to 85, or 80 to 100 degrees F), e.g., 30 degrees C (85 degrees F), when the residual CO₂ gas 32 enters the second stage compressor 236. The temperature may be approximately 38 to 93, 66 to 82, or 70 to 93 degrees C (or 100 to 200, 150 to 180, or 160 to 200 degrees F), e.g., 70 degrees C (160 degrees F), when the residual CO₂ gays 32 exits the second stage compressor 236.

The residual CO₂ gas 32 then flows to another trim cooler 342 as depicted by arrow 400. At the trim cooler 342, the residual CO₂ gas 32 may be cooled to an ambient temperature, such as approximately 10 to 32, 18 to 30, or 27 to 38 degrees C (or 50 to 90, 65 to 85, or 80 to 100 degrees F), e.g., 30 degrees C (85 degrees F). The trim cooler 342 uses a coolant (e.g., water or air) to decrease the temperature of the residual CO₂ gas 32. In certain embodiments, the trim coolers 340, 342 may be part of the same trim cooler system, e.g., a single heat exchanger with multiple coolant passages. Furthermore, the trim coolers 340, 342 may be integrated with the other heat exchangers 330, 332, 344, 346.

The residual CO₂ gas 32 then flows to another regenerative heat exchanger 344 as shown by arrow 402. Within the second regenerative heat exchanger 344, an already cooled liquid CO₂ 38 absorbs heat from the residual CO₂ gas 32 which may cause the temperature of the residual CO₂ gas 32 to decrease. The cooled liquid CO₂ 38 may have a temperature of approximately -51 to -18, -34 to -12, or -40 to -23 degrees C (or -60 to 0, -30 to 10, or -40 to -10 degrees F), e.g., -36 degrees C (-32 degrees F). The temperature of the residual CO₂ gas 32 may begin at approximately 10 to 32, 18 to 30, or 27 to 38 degrees C (or 50 to 90, 65 to 85, or 80 to 100 degrees F), e.g., 30 degrees C (85 degrees F), then decrease to approximately 18 to 18, -7 to 7, or 0 to 27 degrees C (or 0 to 65, 20 to 45, or 32 to 80 degrees F), e.g., 7 degrees C (44 degrees F).

The residual CO₂ gas 32 then flows to the refrigeration heat exchanger 346 as shown by arrow 404. The refrigeration heat exchanger 346 uses a cool refrigerant 406 entering at arrow 408 to transfer heat from the residual CO₂ gas 32 to the refrigerant 406. This heat exchange causes the cool refrigerant 406 to exit the refrigeration heat exchanger 346 as a warm refrigerant 412, as shown by arrow 410. The refrigerant 406, 412 may be a solvent or other solution useful for transferring heat. Furthermore, the refrigeration heat exchanger 346 and the regenerative heat exchanger 344 may be part of a single refrigeration system, which may also include other heat exchangers, chillers, and coolers. After heat is transferred from the residual CO₂ gas 32 to the refrigerant 406, at least a portion of the residual CO₂ gas 32 is liquefied to the liquid CO₂ 38, while a portion of the residual CO₂ gas 32 remains as a residual gas 298. The liquid CO₂ 38 may have a temperature of approximately -51 to -18, -40 to -29, or -34 to -23 degrees C (or -60 to 0, -40 to -20, or -30 to -10 degrees F), e.g., -40 degrees C (-40 degrees F).

The liquid CO₂ 38 and the residual gas 298 flow to the flash tank 348 as shown by arrow 414. The flash tank 348 causes the liquid CO₂ 30 to separate from the residual gas 298, with the liquid CO₂ 38 exiting at one location as shown by arrow 416, and the residual gas 298 exiting at another location as shown by arrow 424. In other embodiments, the flash tank 348 may be replaced by any type of separation unit useful for separating a liquid from a gas. Under certain conditions, a majority of the fluid exiting the flash tank 348 may be liquid CO₂ 38. For example, approximately 60, 65, or 70 percent of the fluid exiting the flash tank 348 may be liquid CO₂ 38, while 30, 35, or 40 percent of the fluid may be the residual gas 298. Other embodiments may have greater than 50, 60, 70, 75, 80, 90, 92.5, 95, 97.5, or 99 percent of the exiting fluid being liquid CO₂ 38.

The liquid CO₂ 38 then flows, as shown by arrow 418, to a pump 426 configured to pump the liquid CO₂ 38 to a high pressure, such as approximately 10,500 to 17, 250, 13,800 to 16,550, or 15,000 to 22,050 kPa (or 1500 to 2500, 2000 to 2400, or 2200 to 3200 psia), e.g., 15,000 kPa (2200 psia). The liquid CO₂ 38 may increase in temperature after passing through the pump 426 to approximately -51 to -18, -34 to - 12, or -40 to -23 degrees C (or -60 to 0, -30 to 10, or -40 to -10 degrees F), e.g., -36 degrees C (-32 degrees F). At this point, the liquid CO₂ 38 flows to the regenerative heat exchanger 344, as shown by arrow 420. The chilled liquid CO₂ 38 has a significant cooling capacity, while the downstream applications of the liquid CO₂ 38 may not require a low temperature of the liquid CO₂ 38. For example, the downstream applications may require an ambient temperature and high pressure of the liquid CO₂ 38. Accordingly, the regenerative heat exchanger 344 uses the cooling capacity of the liquid CO₂ 38 to pre-cool the CO₂ gas 32 upstream of the refrigeration heat exchanger 346, thereby reducing the cooling requirements of the heat exchanger 346 while warming the liquid CO₂ 38. During the heat exchange, the liquid CO₂ 38 temperature may increase to approximately -18 to 7, -7 to 0, or -23 to -12 degrees C (or 0 to 45, 20 to 32, or -10 to 10 degrees F), e.g., -14 degrees C (7 degrees F). After the liquid CO₂ 38 exits the regenerative heat exchanger 344, shown at arrow 422, the liquid CO₂ 38 may be used in a variety of downstream applications, such as carbon sequestration or enhanced oil recovery. In the illustrated embodiment, the liquefaction system 10 substantially reduces energy consumption and increases efficiency in a facility by exchanging heat between different components, and relying primarily on cooling to liquefy the CO₂ gas 74 without prior compression.

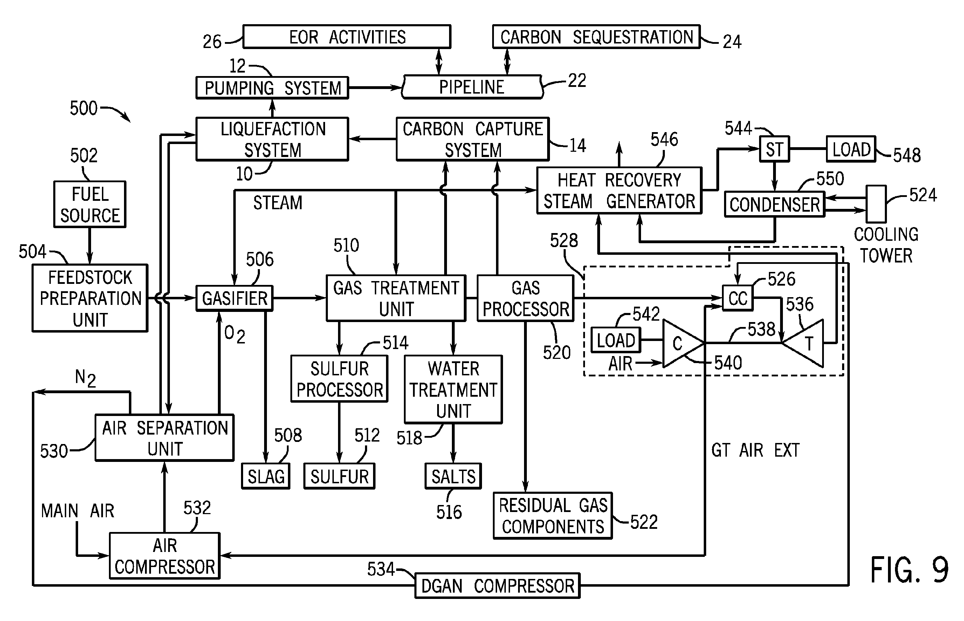

FIG. 9 depicts an IGCC power plant 500 as an embodiment of the power plant 16 illustrated in FIG. 1. In the depicted embodiment, the IGCC power plant 500 may produce and burn a synthetic gas, i.e., a syngas. Elements of the IGCC power plant 500 may include a fuel source 502, such as a carbonaceous feedstock, that may be utilized as a source of energy for the IGCC power plant 500. The fuel source 502 may include coal, petroleum coke, biomass, wood-based materials, agricultural wastes, tars, oven gas, orimulsion, lignite, and asphalt, or other carbon containing items.

The fuel of the fuel source 502 may be passed to a feedstock preparation unit 504. The feedstock preparation unit 504 may, for example, resize or reshape the fuel source 502 by chopping, milling, shredding, pulverizing, briquetting, or palletizing the fuel source 502 to generate feedstock. Additionally, water, or other suitable liquids may be added to the fuel source 502 in the feedstock preparation unit 504 to create slurry feedstock. In certain embodiments, no liquid is added to the fuel source, thus yielding dry feedstock. The feedstock may be conveyed into a gasifier 506 for use in gasification operations.

The gasifier 506 may convert the feedstock into a syngas, e.g., a combination of carbon monoxide and hydrogen. This conversion may be accomplished by subjecting the feedstock to a controlled amount of any moderator and limited oxygen at elevated pressures (e.g., from approximately 4200 to 8300 kPa (or 600 to 1200 psia)) and elevated temperatures (e.g., approximately 1200 to 1500 degrees C (or 2200 to 2700 degrees F)), depending on the type of feedstock used. The heating of the feedstock during a pyrolysis process may generate a solid (e.g., char) and residue gases (e.g., carbon monoxide, hydrogen, and nitrogen).

A partial combustion process may then occur in the gasifier 506. The partial combustion may include introducing oxygen to the char and residue gases. The char and residue gases may react with the oxygen to form CO₂ and carbon monoxide (CO), which provides heat for the subsequent gasification reactions. The temperatures during the partial combustion process may range from approximately 1200 to 1500 degrees C (or 2200 to 2700 degrees F). In addition, steam may be introduced into the gasifier 506. The gasifier 506 utilizes steam and limited oxygen to allow some of the feedstock to be burned to produce carbon monoxide and energy, which may drive a second reaction that converts further feedstock to hydrogen and additional carbon dioxide.

In this way, a resultant gas is manufactured by the gasifier 506. This resultant gas may include approximately 85 percent of carbon monoxide and hydrogen in equal proportions, as well as Argon, CH₄, HCl, HF, COS, NH₃, HCN, and H₂S (based on the sulfur content of the feedstock). This resultant gas may be termed untreated syngas, since it contains, for example, H₂S. The gasifier 506 may also generate waste, such as slag 508, which may be a wet ash material. This slag 508 may be removed from the gasifier 506 and disposed of, for example, as road base or as another building material. To treat the untreated syngas, a gas treatment unit 510 may be utilized. In one embodiment, the gas treatment unit 510 may include one or more water gas shift reactors. The water gas shift reactors may aid in elevating the level of hydrogen (H₂) and CO₂ in the fuel by converting the CO and H₂O in the syngas into CO₂ and H₂ (e.g., sour shifting). The gas treatment unit 510 may also scrub the untreated syngas to remove the HCl, HF, COS, HCN, and H₂S from the untreated syngas, which may include separation of sulfur 512 in a sulfur processor 514 component of the gas treatment unit 510. Furthermore, the gas treatment unit 510 may separate salts 516 from the untreated syngas via a water treatment unit 518 that may utilize water purification techniques to generate usable salts 516 from the untreated syngas. Subsequently, the gas from the gas treatment unit 510 may include treated syngas, (e.g., the sulfur 512 has been removed from the syngas), with trace amounts of other chemicals, e.g., NH₃ (ammonia) and CH₄ (methane).

A gas processor 520 may be used to remove additional residual gas components 522, such as ammonia and methane, as well as methanol or any residual chemicals from the treated syngas. Argon may also be recovered. Argon is a valuable product which may be recovered using, for example, cryogenic techniques. However, removal of residual gas components from the treated syngas is optional, since the treated syngas may be utilized as a fuel even when containing the residual gas components, e.g., tail gas.

The carbon capture system 14 may extract and process the carbonaceous gas, e.g., CO₂. The carbon capture system 14 may interoperate with the gas treatment unit 510, including the sulfur processor 514, to remove CO₂ from the syngas before combustion (i.e., pre-combustion extraction). Additionally, carbon capture techniques may be used to extract CO₂ after combustion of the syngas (i.e., post-combustion extraction). Further, combustion techniques may be used to aid in removing the CO₂ during combustion (i.e., modified combustion). Some example techniques for CO₂ extraction that include pre, post, and modified combustion modalities are as follows. Physical absorption techniques may be used that employ a physical solvent such as methanol, Selexol™, Purisol™, or Rectisol™, among others, during an acid gas reduction (AGR) process in the sulfur processor 514 to dissolve acid gases, such as H₂S, and CO₂ from the syngas. The H₂S and CO₂ rich liquid may then be further processed to remove and separate the H₂S and the CO₂, for example by using a regeneration vessel (e.g., stripper). Chemical absorption techniques may be used that employ amines, caustics and other chemical solvents to scrub, for example, a cooled flue gas that is brought into contact with the solvent. The CO₂ may then become bound into the chemical solvent. The enriched solvent may then be caused to release the CO₂ by techniques such as the aforementioned regeneration vessel.

Physical adsorption techniques may also be used wherein solid sorbents, such as sorbents based on zeolites, silica, and so forth, bind the CO₂ such as the CO₂ in the flue gas so as to remove the CO₂ from the flue gas. Chemical adsorption techniques employing, for example, metal oxides may also be used in a similar manner. Membrane-based techniques may also be used, wherein plastics, ceramics, metals, and so forth are used as permeable barrier to separate the CO₂ from a flow containing the CO₂. Modified combustion techniques such as oxy-fuel and chemical looping may also be used to extract the CO₂. In oxy-fuel, approximately pure oxygen is used in lieu of air as the primary oxidant. The fuel is combusted in the oxygen so as to produce a flue gas rich in CO₂ and water vapor. The CO₂ may then be more easily extracted from the flue gas and water vapor. The use of oxygen also reduces the nitrous oxides (NOx) that may be produced when using air. In chemical looping, dual fluidized bed systems employing, for example, a metal oxide are used to extract CO₂. The metal oxide works as a bed material providing oxygen for combustion. Oxygen replaces air as an oxidant and is used to combust the fuel. CO₂ extraction techniques may more easily extract the flue gas rich in CO₂. The subsequently reduced metal is transferred to the second bed to re-oxidize. The re-oxidized metal is then reintroduced into the first bed and again used for combustion, closing the loop. Cryogenic techniques capable of cooling flue gas to desublimation temperatures (e.g., approximately -100 to -135 degrees C (-148 to -211 degrees F)) may be used. Solid CO₂ may form due to the cooling, and is subsequently removed from the flue stream. Indeed, any number and combination of carbon capture techniques, such as the aforementioned techniques, may be included in the carbon capture system 14.

The CO₂ may then be liquefied by the liquefaction system 10 and pumped to a high pressure by the pumping system 12. The liquefaction system 10 utilizes an air separation unit (ASU) 530 of the IGCC plant 500. The cold temperatures within the cryogenic cooling system of the ASU 530 cool the CO₂ gas to liquefy it. The CO₂ gas flows from the liquefaction system 10 to the ASU 530, then returns to the liquefaction system 10 as a liquid CO₂. In other embodiments, the liquefaction system 10 may use a refrigeration system or other cooling mechanism to liquefy the CO₂. The CO₂ then flows to the pumping system 12 to be pumped to a high pressure. For example, the CO₂ may be pumped to high pressures of approximately 10,500 to 17, 250, 13,800 to 16,550, or 15,000 to 22,050 kPa (or 1500 to 2500, 2000 to 2400, or 2200 to 3200 psia), e.g., 15,000 kPa (2200 psia). The high pressure, liquefied CO₂ may then be transported by a pipeline system 22. The CO₂ may then be redirected into the carbon sequestration system 24 and/or the EOR 26. Accordingly, emissions of the extracted CO₂ into the atmosphere may be reduced or eliminated by redirecting the extracted CO₂ for other uses. Furthermore, using the ASU 530 to liquefy the CO₂ gas may reduce energy consumption to produce a high pressure, liquefied CO₂.

In certain embodiments, the IGCC plant 500 may be designed to incorporate the liquefaction system 10 and the pumping system 12 as original equipment or a retrofit kit. Indeed, it is possible to retrofit the liquefaction system 10 and the pumping system 12 to a variety of existing IGCC plants 500. The retrofitted liquefaction system 10 may include integration with ASU 530 systems, carbon capture systems 14, pumping systems 12, and pipelines 22.

After the CO₂ has been captured from the syngas, the treated syngas may be then transmitted to a combustor 526, e.g., a combustion chamber, of the gas turbine engine 528 as combustible fuel. The ASU 530 may operate to separate air into component gases by, for example, distillation techniques. The ASU 530 may separate oxygen from the air supplied to it from a supplemental air compressor 532, and the ASU 530 may transfer the separated oxygen to the gasifier 506. Additionally the ASU 530 may transmit separated nitrogen to a diluent nitrogen (DGAN) compressor 534.

The DGAN compressor 534 may compress the nitrogen received from the ASU 530 at least to pressure levels equal to those in the combustor 526, so as not to interfere with the proper combustion of the syngas. Thus, once the DGAN compressor 534 has adequately compressed the nitrogen to a proper level, the DGAN compressor 534 may transmit the compressed nitrogen to the combustor 526 of the gas turbine engine 528. The nitrogen may be used as a diluent to facilitate control of emissions, for example.

As described previously, the compressed nitrogen may be transmitted from the DGAN compressor 534 to the combustor 526 of the gas turbine engine 528. The gas turbine engine 528 may include a turbine 536, a drive shaft 538 and a compressor 540, as well as the combustor 526. The combustor 526 may receive fuel, such as syngas, which may be injected under pressure from fuel nozzles. This fuel may be mixed with compressed air as well as compressed nitrogen from the DGAN compressor 534, and combusted within combustor 526. This combustion may create hot pressurized exhaust gases.

The combustor 526 may direct the exhaust gases towards an exhaust outlet of the turbine 536. As the exhaust gases from the combustor 526 pass through the turbine 536, the exhaust gases force turbine blades in the turbine 536 to rotate the drive shaft 538 along an axis of the gas turbine engine 528. As illustrated, the drive shaft 538 is connected to various components of the gas turbine engine 528, including the compressor 540.

The drive shaft 538 may connect the turbine 536 to the compressor 540 to form a rotor. The compressor 540 may include blades coupled to the drive shaft 538. Thus, rotation of turbine blades in the turbine 536 may cause the drive shaft 538 connecting the turbine 536 to the compressor 540 to rotate blades within the compressor 540. This rotation of blades in the compressor 540 causes the compressor 540 to compress air received via an air intake in the compressor 540. The compressed air may then be fed to the combustor 526 and mixed with fuel and compressed nitrogen to allow for higher efficiency combustion. Drive shaft 538 may also be connected to a load 542, which may be a stationary load, such as an electrical generator for producing electrical power, for example, in a power plant. Indeed, the load 542 may be any suitable device that is powered by the rotational output of the gas turbine engine 528.

The IGCC power plant 500 also may include a steam turbine engine 544 and a heat recovery steam generation (HRSG) system 546. The steam turbine engine 544 may drive a second load 548. The second load 548 may also be an electrical generator for generating electrical power. However, both the first and second loads 542, 548 may be other types of loads capable of being driven by the gas turbine engine 528 and steam turbine engine 544. In addition, although the gas turbine engine 528 and steam turbine engine 544 may drive separate loads 542 and 548, as shown in the illustrated embodiment, the gas turbine engine 528 and steam turbine engine 544 may also be utilized in tandem to drive a single load via a single shaft. The specific configuration of the steam turbine engine 544, as well as the gas turbine engine 528, may be implementation-specific and may include any combination of sections.

The system 500 may also include the HRSG 546. Heated exhaust gas from the gas turbine engine 528 may be transported into the HRSG 546 and used to heat water and produce steam used to power the steam turbine engine 544. Exhaust from, for example, a low-pressure section of the steam turbine engine 544 may be directed into a condenser 550. The condenser 550 may utilize the cooling tower 524 to exchange heated water for chilled water. The cooling tower 524 acts to provide cool water to the condenser 550 to aid in condensing the steam transmitted to the condenser 550 from the steam turbine engine 544. Condensate from the condenser 550 may, in turn, be directed into the HRSG 546. Again, exhaust from the gas turbine engine 528 may also be directed into the HRSG 546 to heat the water from the condenser 550 and produce steam.

In combined cycle power plants such as IGCC power plant 500, hot exhaust may flow from the gas turbine engine 528 and pass to the HRSG 546, where it may be used to generate high-pressure, high-temperature steam. The steam produced by the HRSG 546 may then be passed through the steam turbine engine 544 for power generation. In addition, the produced steam may also be supplied to any other processes where steam may be used, such as to the gasifier 506. The gas turbine engine 528 generation cycle is often referred to as the "topping cycle," whereas the steam turbine engine 544 generation cycle is often referred to as the "bottoming cycle." By combining these two cycles as illustrated in FIG. 9, the IGCC power plant 500 may lead to greater efficiencies in both cycles. In particular, exhaust heat from the topping cycle may be captured and used to generate steam for use in the bottoming cycle.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system, comprising:
   a carbon dioxide (CO₂) liquefaction system, comprising:
      a first cooling system configured to cool a CO₂ gas to liquefy greater than approximately 50 percent of the CO₂ gas to produce a first CO₂ liquid, wherein then CO₂ gas pressure is less than approximately 3450 kilopascals (500 pounds per square inch absolute).
2. The system of clause 1, wherein the CO₂ gas pressure is less than approximately 2400 kilopascals (350 pounds per square inch absolute).
3. The system of any preceding clause, wherein the first cooling system is configured to cool the CO₂ gas to liquefy greater than approximately 50 percent of the CO₂ gas to produce the first CO₂ liquid.
4. The system of any preceding clause, wherein the first cooling system comprises a first cryogenic cooling system.
5. The system of any preceding clause, wherein the liquefaction system comprises an air separation unit having the first cryogenic cooling system.
6. The system of any preceding clause, wherein the first cooling system comprises a first refrigeration system.
7. The system of any preceding clause, comprising a compression system configured to compress a first residual gas from the first cooling system.
8. The system of any preceding clause, wherein the compression system comprises a plurality of compression stages.
9. The system of any preceding clause, wherein the compression system comprises a residual gas flow path of the first residual gas through a first compressor, a first cooler, a second compressor, and a second cooler.
10. The system of any preceding clause, comprising a second cooling system configured to cool the first residual gas to liquefy at least part of the first residual gas.
11. The system of any preceding clause, wherein the first cooling system comprises a first refrigeration system, and the second cooling system comprises a second refrigeration system.
12. The system of any preceding clause, wherein the first refrigeration system comprises a first refrigeration heat exchanger, a first flash tank, and a first regenerative heat exchanger, wherein the first regenerative heat exchanger is configured to transfer heat from the CO₂ gas to the first CO₂ liquid to convert the CO₂ gas to a first CO₂ fluid, the first refrigeration heat exchanger is configured to transfer heat from the first CO₂ fluid to a first refrigerant to convert the first CO₂ fluid to a second CO₂ fluid, the first flash tank is configured to separate the second CO₂ fluid into the first residual gas and the first CO₂ liquid.
13. The system of any preceding clause, wherein the first refrigeration system comprises a first solvent chiller configured to transfer heat from a first solvent to the first CO₂ liquid from the first regenerative heat exchanger.
14. The system of any preceding clause, wherein the second refrigeration system comprises a second refrigeration heat exchanger, a second flash tank, and a second regenerative heat exchanger, wherein the second regenerative heat exchanger is configured to transfer heat from the first residual gas to a second CO₂ liquid to convert the first residual gas to a first residual fluid, the second refrigeration heat exchanger is configured to transfer heat from the first residual fluid to a second refrigerant to convert the first residual fluid to a second residual fluid, the second flash tank is configured to separate the second residual fluid into a second residual gas and the second CO₂ liquid.
15. A system, comprising:
   an air separation unit comprising a cryogenic cooling system, wherein the air separation unit is configured to separate air into oxygen and nitrogen; and
   a liquefaction system configured to cool a carbonaceous gas with the cryogenic cooling system of the air separation unit, wherein the cryogenic cooling system is configured to liquefy at least a first portion of the carbonaceous gas to produce a first carbonaceous liquid.
16. The system of any preceding clause, comprising a compressor configured to compress the carbonaceous gas, and a pump configured to pump the first carbonaceous liquid.
17. The system of any preceding clause, comprising a compression system configured to compress a first residual carbonaceous gas, and a refrigeration system configured to cool the first residual carbonaceous gas to liquefy at least part of the first residual carbonaceous gas.
18. A system, comprising:
   a carbon capture system configured to capture a carbonaceous gas from a synthetic gas; and
   a liquefaction system, comprising:
      a first cooling system configured to cool the carbonaceous gas to liquefy at least a first portion of the carbonaceous gas to produce a first carbonaceous liquid and a first residual carbonaceous gas; and
      a compression system configured to compress the first residual carbonaceous gas.
19. The system of any preceding clause, comprising a second cooling system configured to cool the first residual carbonaceous gas to liquefy at least a second portion of the first residual carbonaceous gas to produce a second carbonaceous liquid and a second residual gas.
20. The system of any preceding clause, wherein the first cooling system comprises a first refrigeration system, the second cooling system comprises a second refrigeration system, and the first refrigeration system is configured to liquefy at least 75 percent of the carbonaceous gas to produce the first carbonaceous liquid.

## Claims

1. A system, comprising:
a carbon dioxide (CO₂) liquefaction system (10), comprising:
a first cooling system (28) configured to cool a CO₂ gas (74) to liquefy greater than approximately 50 percent of the CO₂ gas (74) to produce a first CO₂ liquid (30), wherein the CO₂ gas (74) pressure is less than approximately 3450 kilopascals (500 pounds per square inch absolute).

2. The system of claim 1, wherein the CO₂ gas (74) pressure is less than approximately 2400 kilopascals (350 pounds per square inch absolute).

3. The system of any preceding claim, wherein the first cooling system (28) is configured to cool the CO₂ gas (74) to liquefy greater than approximately 50 percent of the CO₂ gas (74) to produce the first CO₂ liquid (30).

4. The system of any preceding claim, wherein the first cooling system (28) comprises a first cryogenic cooling system (160).

5. The system of claim 4, wherein the liquefaction system (10) comprises an air separation unit (180) having the first cryogenic cooling system (160).

6. The system of any preceding claim, wherein the first cooling system (28) comprises a first refrigeration system (78).

7. The system of any preceding claim, comprising a compression system (34) configured to compress a first residual gas (32) from the first cooling system (28).

8. The system of any preceding claim, wherein the compression system (34) comprises a plurality of compression stages (232, 236).

9. The system of any preceding claim, wherein the compression system (34) comprises a residual gas flow path (266) of the first residual gas (32) through a first compressor (232), a first cooler (234), a second compressor (236), and a second cooler (238).

10. The system of any preceding claim, comprising a second cooling system (36) configured to cool the first residual gas (32) to liquefy at least part of the first residual gas (32).
